# EUROPEAN PATENT APPLICATION

(11) **EP 1 184 243 A1**
(43) Date of publication of application: **06.03.2002**
(21) Application number: 01600016.8
(22) Date of filing: 07.06.2001
(51) Int. Cl.: B60S 9/10, F15B 11/16

(54) **Built-in hydraulic jack for a car**

(30) Priority: 01.09.2000 GR 2000100295
(71) Applicant: Terzis, Georgios, 231 00 Sparti (GR)
(72) Inventor: Terzis, Georgios, 231 00 Sparti (GR)

(57) **Abstract**

The elevation of an automobile is achieved easily when two identical hydrostatic cycles (one is shown in figure 1) each of which ends in hydroslatic double energy cylinder (11). The cylinders are positioned on both sides of the automobile (right - left) so that when the automobile is elevated it is supported steadily on pistons (13).

The two cycles are independent between them and fed with oil from a pump. With simple direction flow (14) tha1 starts with an electric motor (15). The flow of oil is, regulated from the direction valves 4/3 and (4) and after the oil passes valves (5) (6)(7)(8)(9)(10) according to the circumstance ends up in cylinders (11) where the lower part of the pistons (13) exit or enter the cylinders in order to elevate or lower the automobile.

The hydraulic automobile lift is useful in many emergencies (to change a tire, to free the vehicle from mud or sand etc.) and it assures easy and safe use.

## Description

This invention refers to a hydraulic lift system situated properly on an automobile and composed of two hydraulic cycles independent from each other, which both end in two hydraulic cylinders double energy which are situated on both the left and right side of the automobile. With the help of these two cylinders we have the ability to elevate an automobile.

The feeding of the system with oil is achieved by the use of a pump with simple direction flow and a stable special line, which starts with an electric motor.
In order to elevate an automobile in situations such as to change a tire or rise out of sand or mud etc. is now achieved by using a hand held jack , which all automobiles have. In order to correctly and safely use a jack to elevate an automobile we must first: a) have knowledge of how to use it b)have skill and experience in order to place it correctly especially when used on ground with a slope c) substantial muscle strength while working d) enough time which sometimes is precious. Finally we must take into consideration the possible soiling of hands and clothes from the parts of the jack which are covered with grease.

For all these reasons the use of a classic jack. today results in an unpleasant problem for many people which seek easy and simple solutions having safety in mind.

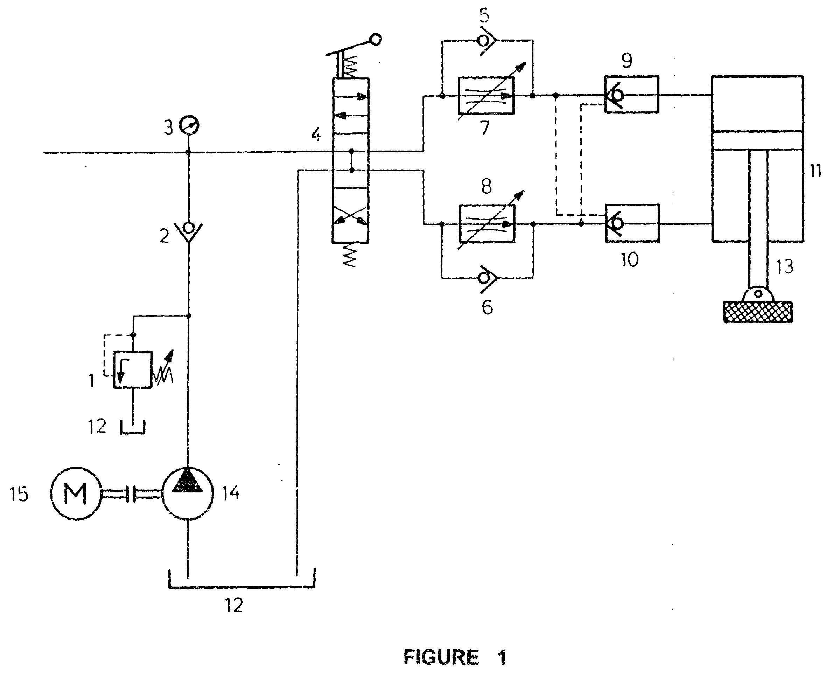

This invention has the intention of improving the disadvantages above. One needs to do nothing more than adjust properly the direction of the oil flow to the hydrostatic cycle using the band lever of the 4 valve (figure 1) without much effort and avoiding contact with any other part of the system, we aachieve with safety the elevation of the automobile even if the ground has a slope. And all this is achieved in a short period of time.

Figure 1 shows one of the two identical hydraulic cycles, which compose the hydraulic lift system. The oil is absorbed from the oil lank(12) though simple direction of flow and stable special line(14) which starts up with an electric motor (15). After it passes the return valve (2) which protects the pump by not allowing the oil to return back, it divides into two hydrostatic cycles. When reaching the valve direction flow 4/3 (4 connections /3 positions)
(4) and according to the position we manually set the oil:
a)returns to the oil tank if the valve(4) is positioned in the middle without starting up the remaining system of the cycle,
b)is directed to the regulated choke valve (7) if valve (4) is in the upper position and after it passes to the return valve with the possibility of opposite flow (9) it reaches the upper part at the hydrostatic cylinder (11) and forces the piston (13) to rise coming out of the cylinder and thus elevating the automobile,
c)is directed to the choke valve (8) if the valve (4) is in the lower position and after it passes the return valve with possible opposite flow (10) it reaches the lower part of the hydrostatic cylinder (11) and forces the piston (13) to rise going into the cylinder and thus lowering the automobile which was elevated earlier.

In the second case b) the of which is compressed in the lower part of the cylinder through valve (10) which allows the opposite flow through the valve (6) and through valve (4) (upper position) returns to the oil tank.

In the third case c) the oil which is compressed in the upper part of the cylinder through valve (9) which allows the opposite flow through ,passes the return valve (5) and trough valve (4) lower position returns to the oil tank.

The two hydrostatic cycles are protected from possible undesired increase of oil pressure , with the adjustable valve minimal pressure (relief valve) (1) which checks the oil pressure in the conductor immediately after the pump opens when pressure is more than the preset pressure setting leads the oil to the oil tank (12).

At the point where the oil divides into two cycles the oil measuring devise (manometer) (3) gives us the ability to oversee the pressure in the lift system.

## Claims

1. The hydraulic automobile lift is composed of two identical hydrostatic cycles. Which are supplied with oil from the oil tank (12) through a simple direction pump a stable special line (14) which starts with an electric motor (15).
Each hydrostatic cycle is composed of a direction valve 4/3 (4 connections/3 positions) (4) which the oil is led according to the situation, to the regulated choke valves (7)(8) and from there through the return valves with possible opposite flow (9) (10) ends in the double energy hydrostatic cylinder (1) which moves piston (13) out or in to accomplish the elevation or lowering of the automobile. The oil is compressed in cylinder (11) with the movement of piston (13) returns to the oil tank (12) through valves (9) (10) and (5) or (6) accordingly after passing valve (4).
The hydraulic lift system is characteristic in that the two hydrostatic cycles which it is composed of are independent between them, and can work simultaneously or individually according to circumstance. There are also safety features for the protection of pump (14) relief valves (1) and return valves (2) as well as the safe function of the circuits and valves (5)(6)(7)(8)(9)(10).

2. The hydraulic automobile lift according to capability 1. is characteristic that the position of the hydrostatic cylinder is standard on the left and right side of the car nd that the piston ends (13) have the ability to slightly revolve at the point of support so that they can safely stabilize the automobile even on grounds with a slope.
